# EUROPÄISCHE PATENTSCHRIFT

(11) **EP 2 687 404 B1**
(45) Veröffentlichungstag und Bekanntmachung des Hinweises auf die Patenterteilung: **02.01.2019**
(21) Anmeldenummer: 13003557.9
(22) Anmeldetag: 15.07.2013
(51) Int. Cl.: B60P 7/08

(54) **Anordnung zur Ladungssicherung**
Assembly for securing loads
Agencement de sécurisation de chargement

(30) Priorität: 18.07.2012 DE 102012014232
(43) Veröffentlichungstag der Anmeldung: 22.01.2014
(73) Patentinhaber: Fahrzeugwerk Bernard Krone GmbH, 48480 Spelle (DE)
(72) Erfinder: Perk, Thorsten, 29301 Lorup (DE)
(74) Vertreter: Pott, Ulrich

(56) Entgegenhaltungen:
- EP-A1- 1 291 239
- DE-A1- 10 040 058
- US-A- 3 380 695
- US-A- 5 954 465
- US-A1- 2003 161 700
- US-B1- 6 206 624

## Beschreibung

Die Erfindung bezieht sich auf eine Anordnung zur Ladungssicherung auf Nutzfahrzeugen welche zumindest zwei quer zur Fahrtrichtung ausgerichtete Balken aufweist, die jeweils über Befestigungsmittel mit seitlich an den Längsaußenseitenkanten der Ladefläche des Nutzfahrzeuges fest vorgesehenen, mit Löchern versehenen Befestigungsschienen verbindbar und in Bezug zur Fahrzeuglängsrichtung in unterschiedlichen Positionen an den Befestigungsschienen arretierbar sind, wobei die quer zur Fahrtrichtung ausgerichteten Balken über ihre Länge verteilt mit Lochaufnahmen zur Halterung weiterer Ladungssicherungselemente versehen sind und in ihrer mit der Befestigungsschiene verbundenen arretierten Stellung zumindest bereichsweise auf der Ladefläche aufliegen und ihre Befestigungsmittel die Längsaußenkante der Ladefläche übergreifend in die Löcher der Befestigungsschiene eingreifen.

Anordnungen zur Ladungssicherung sind in vielfältiger Ausgestaltung bekannt. Diese dienen insbesondere dazu, auf einer Nutzfahrzeugladefläche positionierte Gegenstände wie Kisten, Transportpaletten und dergleichen Ladegut während einer Nutzfahrzeugfahrt gegen ein unbeabsichtigte Bewegungen zu sichern.

Aus der gattungsgemäßen EP 1 291 239 B1 ist eine Anordnung zur Ladungssicherung der eingangs genannten Art bekannt, bei der an einer im montierten Zustand aufrechten Leiste an jedem der quer zur Fahrtrichtung ausgerichteten Balken Zurrlöcher als Lochaufnahmen vorgesehen sind, in die Befestigungshaken von Zurrgurten einzubringen sind, so das parallel zur Fahrzeuglängsrichtung die Ladung zu verzurren ist.

Die quer zur Fahrzeugrichtung ausgerichteten Balken sind an seitlich an den Längsaußenseitenkanten der Ladefläche fest vorgesehenen Halterungsmitteln in Gestalt von mit Löchern versehenen Befestigungsschienen zu befestigen, so dass die quer zur Fahrzeugrichtung ausgerichteten Balken in unterschiedlichen Positionen und Lagen auf der Ladefläche an diesen Befestigungsschienen zu arretieren sind. Nachteilig hierbei ist, dass sich die Ladung zwar mittels der Verzurrgurte in Fahrzeuglängsrichtung verzurren lässt, jedoch bei Querbeschleunigungen, z.B. während einer Kurvenfahrt, die Ladung nur über die Verzurrkräfte gegen ein seitliches Verrutschen gesichert ist, was sehr zeitaufwändig ist. Zusätzliche Einbauten wie Kissen oder ähnliches Füllmaterial als Ladungssicherung sind ebenfalls auch sehr zeitaufwändig einzubauen und beanspruchen Lagerraum.

Aus der US 5,954,465 A ist eine Anordnung zur Halterung zylindrischer Ladung auf einer Nutzfahrzeugfläche abzulegendes Rahmengestell aufweist, das über Zuganker mit seitlich von den Längsaußenkanten der Ladefläche abstehenden Sicherungsleisten verspannbar ist. Dazu sind Spannhaken an dem Rahmengestell vorgesehen, die mit einem Gewinde versehen sind und durch Schraubbewegungen in ihre Spannstellung gebracht werden können. Parallel zur Fahrtrichtung angeordnete Gestellrahmenbalken weisen Löcher auf, in die stiftförmige Befestigungselemente von weiteren zwei Rahmenteilen einzubringen sind. Die mit Abstand zueinander angeordneten weiteren Rahmenteile erstrecken sich quer zur Fahrtrichtung. In diese sind wiederum Schrauben einzubringen, die ein weiteres Rahmenteil an diesem Querbalken befestigen, um das zylindrische Ladegut, in diesem Fall in aller Regel eine Metallblechrolle, durchsetzen können, um das zylindrische Ladegut durch den das Ladegut durchsetzenden Balken gegen die Ladefläche zu drücken. Zur seitlichen Ladungssicherung können auf diesen Querbalken wiederum weitere Balken festgelegt werden, die parallel zur Fahrzeuglängsrichtung ausgerichtet sind.

Diese Anordnung zur Ladungssicherung ist sehr aufwändig und baut außerordentlich hoch. Diese große Höhe ist bei zu transportierenden zylindrischen Transportgütern vielfach gewünscht. Sind jedoch auf Paletten stehende Transportgüter zu sichern, ist diese Art der Ladungssicherung unbrauchbar.

Aus der DE 100 40 058 A1 ist eine Anordnung zur Ladungssicherung bekannt, die in die Ladefläche eingelassene schienenförmige Rahmenteile mit Aufnahmeöffnungen aufweist, in die mit vertikaler Ausrichtung Ladungssicherungselemente einzustecken sind. Damit ist jedoch eine durchgehende Ladefläche nicht mehr ermöglicht. Das Rastermaß, in der Ladungssicherungselemente vorgesehen werden können, ist zudem beschränkt.

Es ist Aufgabe der vorliegenden Erfindung, eine Anordnung zur Ladungssicherung derart weiterzubilden, dass die Ladung gegen quer zur Fahrzeuglängsrichtung ausgerichtete Bewegungen gesichert ist.

Zur Lösung dieser Aufgabe zeichnet sich die Anordnung zur Ladungssicherung der eingangs genannten Art dadurch aus, dass als weiteres Ladungssicherungselement ein parallel zur Fahrtrichtung ausgerichteter Schwertbalken vorgesehen ist, der Befestigungselemente aufweist, die an zwei benachbarten, mit Abstand zueinander angeordneten, quer zur Fahrtrichtung ausgerichteten Balken festlegbar sind.

Damit ist eine Anordnung zur Ladungssicherung geschaffen, bei der weiterhin an den Aufnahmen von quer zur Fahrzeugrichtung ausgerichteten Balken Verzurrgurte oder sonstige Verspannmitttel, die in Fahrzeuglängsrichtung ausgerichtet sind, befestigt werden können. Darüber hinaus ist jedoch durch die Schwertbalken sicher zu stellen, dass auf der Nutzfahrzeugladefläche positionierte Güter durch die Schwertbalken gegen Bewegungen quer zur Fahrzeuglängsrichtung gehindert sind. Dazu liegen diese an den entsprechenden Ladungsgütern, beispielsweise Kisten, Transportpaletten und dgl. vorzugsweise formschlüssig an.

Die Schwertbalken sind jeweils zwei mit Abstand voneinander auf der Ladefläche vorgesehenen Querbalken, also den Balken, die quer zur Fahrzeuglängsrichtung ausgerichtet sind, zugeordnet. Dabei sind diese bevorzugtermaßen derart ausgebildet, dass die Schwertbalken die Querbalken übergreifen. Bevorzugtermaßen haben die Schwertbalken entsprechende Ausnehmungen, so dass die Ausnehmungen die Querbalken über- und umgreifen, so dass die Querbalken in der jeweiligen Ausnehmung eintauchen und nach Montage in diesen gelegen sind. Bevorzugtermaßen kann ein Schwertbalken auch mehrere Ausnehmungen für den jeweiligen Querbalken aufweisen, um unterschiedliche Abstandsmaße mit ein- und demselben Schwertbalken berücksichtigen zu können.

Die Querbalken sind wie beim Stand der Technik in unterschiedlichen Positionen an den Halterungsmitteln der Nutzfahrzeugladefläche anzubinden, nämlich in den entsprechenden mit Abstand zueinander angeordneten Löchern in der Befestigungsschiene. Dazu kann ein quer zur Fahrzeugrichtung ausgerichteter Balken (Querbalken) einenends eine feststehende hakenförmige Anbindung haben, die in einen entsprechendes Loch der Befestigungsschiene an einer Seite der Nutzfahrzeugfläche einzubringen ist. An der gegenüberliegenden Seite kann der Querbalken einen verschwenkbaren, riegelförmigen Hakenverschluss haben, der nach Positionierung eines Querbalkens durch eine Schwenkbewegung in die entsprechende Lochausnehmung der gegenüberliegenden Befestigungsschiene der Nutzfahrzeugfläche einzubringen ist und dort über ein mechanisches Sicherungselement, beispielsweise einen Bügel, gesichert werden kann. Der jeweilige Schwertbalken ist in die entsprechenden Lochausnehmungen an der Oberseite oder auch an seinen Außenflächen des Querbalkens einzubringen, und kann ggf. dort auch gesichert werden.

Weitere vorteilhafte Ausgestaltungen der Erfindung ergeben sich aus weiteren Unteransprüchen der nachfolgenden Beschreibung und der Zeichnung: In der Zeichnung zeigen:
- Fig. 1: in einer perspektivischen Darstellung ein Ausführungsbeispiel eines Nutzfahrzeugaufliegers mit einer teilweise aufgeschnitten dargestellten Seitenplane und zwei angedeuteten auf Transportfüßen stehenden Transportkisten;
- Fig. 2: ausschnittsweise die Anbindung von quer zur Fahrzeugrichtung ausgerichteten Balken an einer seitlichen Halteschiene mit daran befestigten Schwertbalken ;
- Fig. 3: eine Querschnittsdarstellung des quer zur Fahrzeugrichtung ausgerichteten Balkens mit daran befestigten Schwertbalken in montierter und verriegelter Lage;
- Fig. 4: eine zur Fig. 3 analoge Darstellung mit entriegeltem quer zur Fahrzeuglängsrichtung ausgerichteten Balken und demontierten Schwertbalken;
- Fig. 5: eine Ansicht von unten (perspektvisch) auf ein Ausführungsbeispiel eines Querbalkens und
- Fig. 6: eine perspektivische Vorderansicht auf das Ausführungsbeispiel nach Fig. 4.

Grundsätzlich sind übereinstimmende Teile mit übereinstimmenden Bezugsziffern versehen.

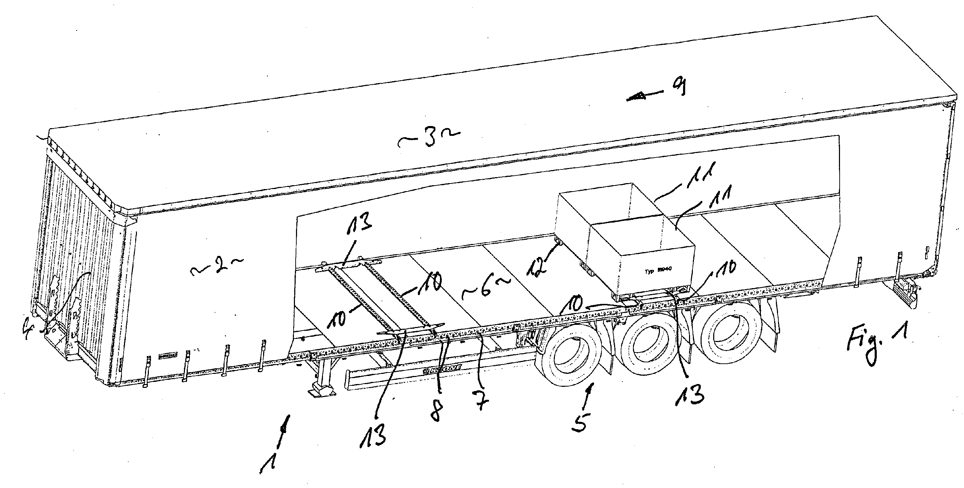

Allgemein mit 1 ist das in Fig. 1 ersichtliche Nutzfahrzeug beziffert in Gestalt eines mit Seitenplanen 2, einem Dach 3 und mit Hecktüren 4 versehenen Sattelaufliegers, der ein Fahrgestell 5 aufweist sowie eine Ladefläche 6. Seitlich ist die Ladefläche 6 mit einer Befestigungsschiene 7 als Halterungsmittel für Ladungssicherungselemente versehen, die fest mit der Ladefläche 6 verbunden ist und mit Abstand zueinander angeordnete Löcher 8 aufweist. An diesen Löchern 8 sind quer zur Fahrtrichtung 9 ausgerichtete Balken 10 zu befestigen, so dass der Abstand von zwei Balken zueinander verändert werden kann und diese an nahezu beliebiger Stelle auf der Ladefläche angeordnet werden können.

In dem Ausführungsbeispiel nach Fig. 1 ist die Seitenplane 2 teilweise ausgeschnitten dargestellt, so dass der Innenraum einsehbar ist. Dort sind exemplarisch zwei Transportkisten 11 angeordnet, die auf Füßen 12 platziert sind. Diese sind jeweils von den quer zur Transportrichtung 9 ausgebildeten Balken 10 im dargestellten Ausführungsbeispiel begrenzt, so dass die Querbalken 10 an den aufeinander zu gerichteten Seitenflächen der Palettenfüße 12 anliegen und insofern eine Bewegung der Transportkisten 11 in und entgegen die Fahrtrichtung 9 verhindern.

Die quer zur Fahrtrichtung 9 ausgerichteten Balken 10 haben nicht nur an ihren Seitenflächen mit Abstand vorgesehene Lochausnehmungen 10.2, sondern auf ihrer Oberseite, wie dies aus der Darstellung aus Fig. 1 bei den beiden im linken Bereich vorgesehenen Querbalken 10 ersichtlich ist. Dort sind auch die Schwertbalken 13 vorgesehen. Einer dieser Schwertbalken 13, der an den Querbalken 10 montiert ist, ist auch vor den Füßen 12 der ersten Transportkiste 11 ersichtlich, so dass die beiden Füßen 22 der Transportkiste 11 auch an diesem Schwertbalken 13 anliegt, so dass die Transportkiste 11 auch gegen Bewegung quer zur Fahrzeuglängsrichtung 9 gesichert sind durch Formschluss.

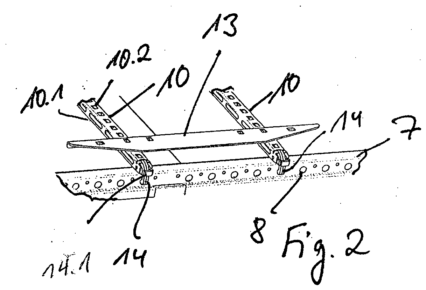

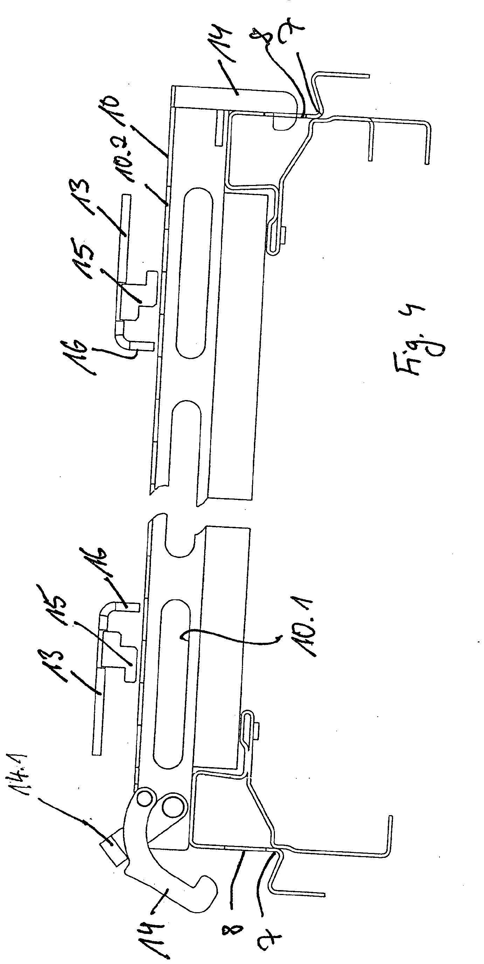

In Fig. 2 ist näher der Anschluss der Querbalken 10 an der Befestigungsschiene 7 ersichtlich. Ersichtlich hat jeder Querbalken auf seiner Oberseite und in seinen Seitenbereichen Lochausnehmungen 10.1 und 10.2, wobei der Schwertbalken 13 mit seinen Befestigungselementen 15 in die oberen Lochausnehmungen 10.2 eingreifen kann. Die Balken 10 haben jeweils ein festes hakenförmiges Ende als Befestigungselement 14 (auf der anderen nicht ersichtlichen Seite) und einen hakenförmigen verschwenkben Riegel 14.1, der in Fig. 2 in seiner Montagestellung gezeigt ist. In der Montagestellung wird der Riegel 14 durch ein Sicherungselement 14.1 (Fig. 4) gesichert, so dass eine selbstätige Hochschwenkbewegung verhindert wird. Damit ist auch der Balken 10 gesichert an der Befestigungsschiene 7 befestigt.

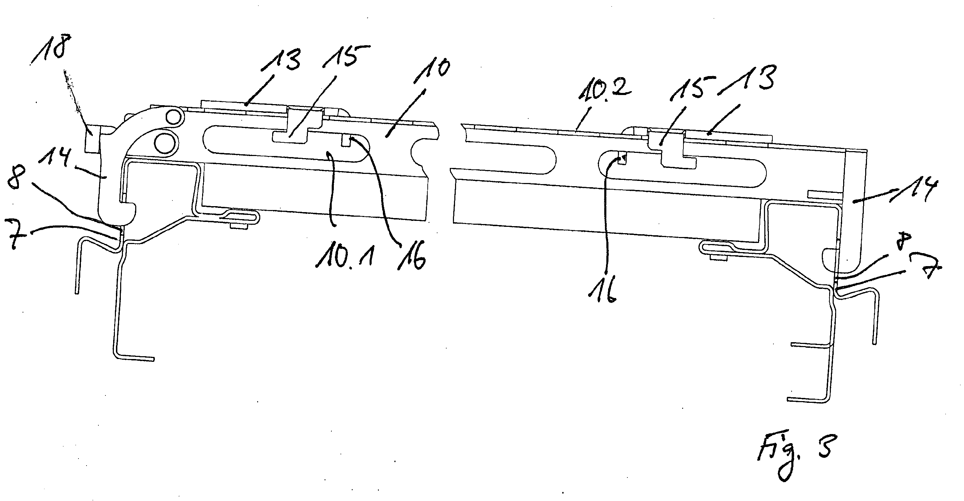

Die Fig. 3 und 4 zeigen in einer Querschnittsdarstellung durch den Querbalken 10 und die Ladefläche 6 den Querbalken 10 und den Schwertbalken 13 in montierter Stellung und in einer Stellung, bei der der Querbalken 10 entriegelt und die Schwertbalken 13 demontiert sind. Der Querbalken 10 hat die bereits angesprochene über die Länge verteilt angeordneten Lochausnehmungen 10.2 und 10.1. An beiden Seiten des Querbalkens 10 ist jeweils ein Schwertbalken 13 vorgesehen. Jeder Schwertbalken 13 hat zwei abgekröpfte Befestigungselemente 15 von denen eines in die entsprechende Lochausnehmung 10.2 oder 10.1 einzuführen ist. Ersichtlich ist, dass jeder Schwertbalken 13 eine zur Nutzfahrzeugladefläche 6 hin ausgerichtete Anschlagfläche 16 aufweist. Dazu ist ein Ende des Schwertbalkens 13 umgebogen. Diese Anschlagfläche 16 kann formschlüssig z.B. an dem Palettenfuß 12 einer Palette bzw. einer Transportkiste 11 anliegen. Der in Fig. 3 und 4 linke Hebel des Querbalkens 10 ist als Schwenkhebel 14 ausgebildet. In Fig. 3 ist dieser Schwenkhebel 14 in der Montagestellung gezeigt, in dem sein hakenförmiges Ende in die Lochausnehmung 8 der Befestigungsschiene 7 angreift. Durch den Verschlussbügel ist er in dieser Montagestellung gehalten, wohingegen der Hebel 14 in Fig. 4 bei verschwenktem Verschlussbügel 14.1 in der Demontagestellung gezeigt ist. Durch ein einfaches Schieben nach rechts in Fig. 4 kann der Querbalken 10 insgesamt von der Ladefläche 6 gelöst werden. Auch die Schwertbalken 13 sind in der demontierten Stellung gezeigt.

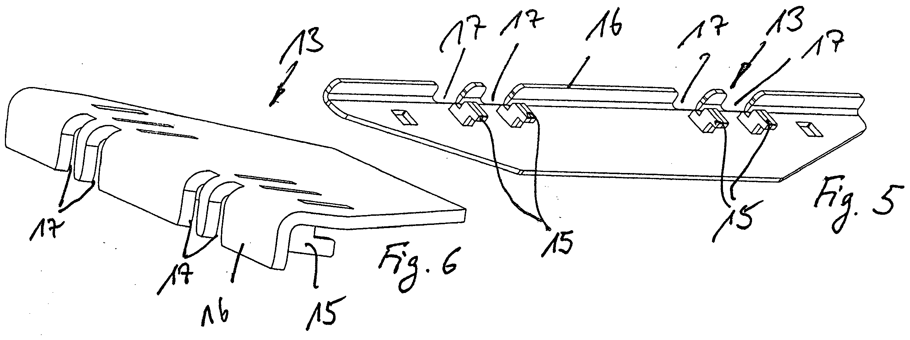

In den Fig. 5 und 6 ist ein Schwertbalken 13 jeweils in verschiedenen perspektivischen Ansichten gezeigt. Ersichtlich ist die Anschlagfläche 16 abgewinkelt. Des weiteren sind auch noch in dieser Anschlagfläche 16 Ausnehmungen 17 ersichtlich, die im montierten Zustand der Teile (siehe auch Fig. 2) von einem Querbalken 10 durchsetzt werden kann, wobei durch die insgesamt vier vorgesehenen Ausnehmungen 17 für zwei Querbalken 10 sowohl an der einen Seite des Schwertbalkens 13 als auch an der anderen Seite des Schwertbalkens 13 ein unterschiedliches Abstandsmaß der Querbalken 10 zueinander an dem Schwertbalken 13 Berücksichtigung finden kann. Demzufolge sind auch in jeder Ausnehmung 17 zwei abgekröpfte Befestigungselement 15 vorgesehen, um dieses Abstandsmaß entsprechend zu berücksichtigen.

## Patentansprüche

1. Anordnung zur Ladungssicherung auf Nutzfahrzeugen (1), welche zumindest zwei quer zur Fahrtrichtung (9) ausgerichtete Balken (10) aufweist, die jeweils über Befestigungsmittel (14) mit seitlich an den Längsaußenseitenkanten der Ladefläche (6) des Nutzfahrzeuges fest vorgesehenen, mit Löchern versehenen Befestigungsschienen (7) verbindbar und in Bezug zur Fahrzeuglängsrichtung (9) in unterschiedlichen Positionen an den Befestigungsschienen (7) arretierbar sind, wobei die quer zur Fahrtrichtung (9) ausgerichteten Balken (10) über ihre Länge verteilt mit Lochaufnahmen (10.1, 10.2) zur Halterung weiterer Ladungssicherungselemente versehen sind und in ihrer mit der Befestigungsschiene (7) verbundenen arretierten Stellung zumindest bereichsweise auf der Ladefläche (6) aufliegen und ihre Befestigungsmittel (14) die Längsaußenkante der Ladefläche (6) übergreifend in die Löcher der Befestigungsschiene (7) eingreifen, **dadurch gekennzeichnet, dass** als weiteres Ladungssicherungselement ein parallel zur Fahrtrichtung (9) ausgerichteter Schwertbalken (13) vorgesehen ist, der Befestigungselemente (15) aufweist, die an zwei benachbarten, mit Abstand zueinander angeordneten, quer zur Fahrtrichtung (9) ausgerichteten Balken (10) festlegbar sind.

2. Anordnung zur Ladungssicherung nach Anspruch 1, **dadurch gekennzeichnet, dass** der Schwertbalken (13) jeweils eine orthogonal zur Ladefläche (6) des Nutzfahrzeuges (1) hin ausgerichtete Anschlagfläche (16) aufweist.

3. Anordnung zur Ladungssicherung nach Anspruch 1 oder 2, **dadurch gekennzeichnet, dass** der Schwertbalken (13) Befestigungselemente (15) zum Einführen in die Ausnehmungen (10.2) von zwei quer zur Fahrtrichtung (9) ausgebildeten Balken (10) aufweist.

4. Anordnung zur Ladungssicherung nach Anspruch 2 oder 3, **dadurch gekennzeichnet, dass** ein Schwertbalken (13) in der orthogonal zur Nutzfahrzeugladefläche (6) hin ausgerichteten Anschlagfläche (16) zumindest zwei mit Abstand zueinander angeordnete Ausnehmungen (17) aufweist, in die im montierten Zustand des Schwertbalkens (13) die einander benachbarten, quer zur Fahrtrichtung (9) ausgerichteten Balken (10) eingreifen.

5. Anordnung zur Ladungssicherung nach Anspruch 4, **dadurch gekennzeichnet, dass** für jeden quer zur Fahrtrichtung ausgerichteten Balken (10) jeweils zwei mit Abstand zueinander angeordnete Ausnehmungen (17) in der orthogonal zur Nutzfahrzeugladefläche (6) hin ausgerichtete Anschlagfläche (16) vorgesehen sind.

6. Anordnung zur Ladungssicherung nach einem der Ansprüche 1 bis 5, **dadurch gekennzeichnet, dass** für jeden quer zur Fahrzeuglängsrichtung (9) hin ausgerichteten Balken (10) mindestens ein Befestigungselement (15) an dem Schwertbalken (13) vorgesehen ist.

7. Anordnung zur Ladungssicherung nach einem der Ansprüche 2 bis 6, **dadurch gekennzeichnet, dass** die orthogonal zur Nutzfahrzeugladefläche (6) hin ausgerichtete Anschlagfläche (16) eine im montierten Zustand des Schwertbalkens (13) bis zumindest nahe an die oder bis zur Nutzfahrzeugladefläche (6) reichende Erstreckung hat.

## Claims

1. Assembly for securing loads on commercial vehicles (1), which assembly comprises at least two bars (10) that are oriented transversely to the direction (9) of travel, that can be connected, in each case by fastening means (14), to fastening rails (7) which are provided so as to be fixed to the sides of the longitudinal external lateral edges of the loading area (6) of the commercial vehicle and are provided with holes, and that can be locked in various positions on the fastening rails (7) with respect to the longitudinal direction (9) of the vehicle, the bars (10) oriented transversely to the direction (9) of travel being provided with hole cut-outs (10.1, 10.2), distributed across the lengths thereof, for holding additional load-securing elements and, in the locked position thereof where said bars are connected to the fastening rail (7), said bars resting on the loading area (6) at least in regions and the fastening means (14) thereof engaging in the holes of the fastening rail (7) so as to overlap the longitudinal external edge of the loading area (6), **characterised in that** a crossbeam (13) which is oriented in parallel with the direction (9) of travel is provided as an additional load-securing element and comprises fastening elements (15) which can be fixed to two adjacent bars (10) that are arranged to as to be spaced apart and are oriented transversely to the direction (9) of travel.

2. Assembly for securing loads according to claim 1, **characterised in that** each crossbeam (13) comprises a stop surface (16) that is oriented orthogonally to the loading area (6) of the commercial vehicle (1).

3. Assembly for securing loads according to either claim 1 or claim 2, **characterised in that** the crossbeam (13) comprises fastening elements (15) which are intended to be inserted into the cut-outs (10.2) of two bars (10) that are transverse to the direction (9) of travel.

4. Assembly for securing loads according to either claim 2 or claim 3, **characterised in that** a crossbeam (13) comprises, in the stop surface (16) oriented orthogonally to the loading area (6) of the commercial vehicle, at least two cut-outs (17) which are arranged so as to be spaced apart, in which cut-outs the mutually adjacent bars (10) which are oriented transversely to the direction (9) of travel engage when the crossbeam (13) is mounted.

5. Assembly for securing loads according to claim 4, **characterised in that**, for each bar (10) oriented transversely to the direction of travel, two cut-outs (17) which are arranged so as to be spaced apart are provided in each case in the stop surface (16) oriented orthogonally to the loading area (6) of the commercial vehicle.

6. Assembly for securing loads according to any of claims 1 to 5, **characterised in that** at least one fastening element (15) is provided on the crossbeam (13) for each bar (10) oriented transversely to the longitudinal direction (9) of the vehicle.

7. Assembly for securing loads according to any of claims 2 to 6, **characterised in that** the stop surface (16) oriented orthogonally to the loading area (6) of the commercial vehicle has an extension which, when the crossbeam (13) is mounted, reaches at least close to or as far as the loading area (6) of the commercial vehicle.

## Revendications

1. Dispositif d'arrimage de charges sur des véhicules utilitaires (1), le dispositif comprenant au moins deux barres (10) qui sont orientées transversalement à la direction de déplacement (9) et qui peuvent être reliées chacune, par le biais de moyens de fixation (14), à des rails de fixation (7) pourvus de trous et prévus de manière fixe latéralement aux bords latéraux extérieurs longitudinaux de la surface de chargement (6) du véhicule utilitaire et qui peuvent être bloquées dans différentes positions sur les rails de fixation (7) par rapport à la direction longitudinale du véhicule (9), les barres (10) orientées transversalement à la direction de roulement (9) étant pourvues, de manière répartie sur leur longueur, de trous de réception (10.1, 10.2) destinés au montage d'autres éléments d'arrimage de charge et, dans leur position bloquée reliée au rail de fixation (7), s'appuient au moins partiellement sur la surface de chargement (6) et leurs moyens de fixation (14) s'engagent dans les trous ménagés dans le rail de fixation (7) en s'engageant par-dessous le bord extérieur longitudinal de la surface de chargement (6), **caractérisé en ce qu'**il est prévu comme autre élément d'arrimage de charge une barre diagonale (13) qui est orientée parallèlement à la direction de roulement (9) et qui comporte des éléments de fixation (15) qui peuvent être fixés à deux barres (10) adjacentes, espacées l'une de l'autre, et orientées transversalement à la direction de roulement (9).

2. Dispositif d'arrimage de charge selon la revendication 1, **caractérisé en ce que** la barre diagonale (13) comporte une surface de butée (16) orientée orthogonalement à la surface de chargement (6) du véhicule utilitaire (1).

3. Dispositif d'arrimage de charge selon la revendication 1 ou 2, **caractérisé en ce que** la barre diagonale (13) comporte des éléments de fixation (15) destinés à être inséré dans les évidements (10.2) de deux barres (10) formées transversalement à la direction de roulement (9).

4. Dispositif d'arrimage de charge selon la revendication 2 ou 3, **caractérisé en ce qu'**une barre diagonale (13) comporte, dans la surface de butée (16) orientée orthogonalement à la surface de chargement de véhicule utilitaire (6), au moins deux évidements (17), espacés l'un de l'autre, dans lesquels les barres adjacentes (10), orientées transversalement à la direction de roulement (9), s'engagent lorsque la barre diagonale (13) est montée.

5. Dispositif d'arrimage de charge selon la revendication 4, **caractérisé en ce qu'**il est prévu, pour chaque barre (10) orientée transversalement à la direction de roulement (10), deux évidements (17) espacés l'un de l'autre et ménagés dans la surface de butée (16) orientée perpendiculairement à la surface de chargement de véhicule utilitaire (6).

6. Dispositif d'arrimage de charge selon l'une des revendications 1 à 5, **caractérisé en ce qu'**il est prévu, pour chaque barre (10) orientée transversalement à la direction longitudinale de véhicule (9), au moins un élément de fixation (15) au niveau de la barre diagonale (13).

7. Dispositif d'arrimage de charge selon l'une des revendications 2 à 6, **caractérisé en ce que** la surface de butée (16) orientée perpendiculairement à la surface de chargement de véhicule utilitaire (6) a une étendue suffisante allant, lorsque la barre diagonale (13) est montée, jusqu'à la surface de chargement de véhicule utilitaire (6) ou jusqu'à au moins une position proche de celle-ci.
